# EUROPÄISCHE PATENTANMELDUNG

(11) **EP 3 955 154 A1**
(43) Veröffentlichungstag der Anmeldung: **16.02.2022**
(21) Anmeldenummer: 21168897.3
(22) Anmeldetag: 16.04.2021
(51) Int. Cl.: G06K 7/10

(54) **OPTOELEKTRONISCHE VORRICHTUNG**

(30) Priorität: 13.08.2020 DE 202020104708 U
(71) Anmelder: Leuze electronic GmbH + Co. KG, 73277 Owen/Teck (DE)
(72) Erfinder: Kharrazian, Reza, 72762 Reutlingen (DE); Müller, Thomas, 73119 Zell u.A. (DE)
(74) Vertreter: Ruckh, Rainer Gerhard

(57) **Zusammenfassung**

Die Erfindung betrifft eine optoelektronische Vorrichtung (1) zur Detektion eines Objekts (2), insbesondere zur Detektion von mit definierten Kontrastmustern (3) versehenen Marken (4). Die optoelektronische Vorrichtung (1) umfasst einen Sendestrahlen (5) emittierenden Sender (6) und einen Empfangsstrahlen (7) empfangenden Empfänger (8) sowie Polarisationsfilter (9) zwischen dem Objekt (2) und dem Empfänger (8). Die Wellenlänge der Sendestrahlen (5) ist so gewählt, dass sie in einem für das menschliche Auge nicht wahrnehmbaren Bereich liegt.

## Beschreibung

Die Erfindung betrifft eine optoelektronische Vorrichtung gemäß dem Oberbegriff von Anspruch 1.

Optoelektronische Vorrichtungen sind beispielsweise als Barcode-Leseeinrichtungen zur Erfassung von als Barcodes gebildeten, Kontrastmuster aufweisenden Marken bekannt. Insbesondere bilden derartige Barcodelesegeräte Scanner mit einem Sendestrahlen emittierenden Sender und einem Empfangsstrahlen empfangenden Empfänger, wobei die Strahlen meist im sichtbaren Bereich eines menschlichen Auges liegen.

Die Sendestrahlen werden mittels einer Ablenkeinrichtung periodisch innerhalb eines Abtastbereichs geführt. Die von der zu erfassenden Marke zurückreflektierten Empfangsstrahlen weisen ein Kontrastmuster der Marke entsprechende Amplitudenmodulation auf, die in einer Auswerteeinrichtung der optoelektronischen Vorrichtung zur Dekodierung der Marke, insbesondere des Barcodes ausgewertet wird.

Optoelektronische Vorrichtungen sind des Weiteren als Einrichtung zur Erfassung ein- oder zweidimensionaler, Kontrastmuster aufweisender Marken bekannt. Ein Sendestrahlen emittierender Sender beleuchtet das Objekt. Ein Empfangsstrahlen empfangender Empfänger besteht aus einem Objektiv und einem Bildaufnehmer (zum Beispiel CCD oder CMOS-Sensor), sowie einer Steuer- und Auswerteeinheit zur Dekodierung der Marke, insbesondere des Barcodes oder des zweidimensionalen Codes.

Um Messfehler durch den Einfall von zurückreflektiertem Licht zu vermeiden werden Polarisationsfilter eingesetzt, die dem Empfänger vorgelagert sind und somit nur noch diffus von der Marke zurückreflektierte Empfangsstrahlen durchlassen.

Es werden ferner auch Polarisationsfilter oder sogenannte Analysatoren vor eine Optik des Senders angeordnet, um lediglich Sendelichtstrahlen, die orthogonal zum Polarisationszustand des Senders sind, durchzulassen.

Barcodes oder Marken sind typischerweise auf ein streuendes Material (Papier, Karton) aufgedruckt, das das Licht des Senders depolarisiert, den reinen Polarisationszustand also zerstört. Somit werden störende Reflexe, die durch vor dem Barcode oft angeordnete Schutzfolien, Klarsichthüllen, Deckgläsern etc. entstehen, an dem Analysator geblockt und nur der Teil der Empfangsstrahlen oder Empfangslichtstrahlen, die an dem Barcode gestreut werden und deren Informationen enthält, in ausreichendem Maße vom Analysator zum Empfänger durchgelassen.

Als Analysatoren oder Polfilter kommen hauptsächlich solche zum Einsatz, die durch Dehnung einer Kunststofffolie hergestellt werden. Diese Polfilter für sichtbares Licht lassen sich kostengünstig herstellen.

Reflexionsverringernd wirkt sich auch ein großer Abstand des Senders von Sendestrahlen zu dem Empfänger oder der Kamera aus. Zudem kann es zweckmäßig sein, einen vom rechten Winkel abweichenden Winkel zu wählen, mit dem eine Optik des Empfängers auf die zu detektierende Marke gerichtet ist. Dadurch wird vermieden, dass die Reflexionsbedingungen zustande kommen können.

Die beschriebene optoelektronische Vorrichtung kommt häufig in Räumen oder Bereichen zum Einsatz, in denen sich Menschen aufhalten. Aufgrund der hohen erforderlichen Beleuchtungsstärke kann die Beleuchtung der Vorrichtung das menschliche Auge bei direktem, aber auch indirektem Blick in die Sendeoptik erheblich blenden, irritieren und vorübergehend den Gesichtssinn beinträchtigen.

Ausgehend von diesem Stand der Technik liegt der Erfindung die Aufgabe zugrunde, eine optoelektronische Vorrichtung zu schaffen, die für den Benutzer keine Beeinträchtigung hervorruft und die betriebssicher ist.

Die Aufgabe wird mit einer optoelektronischen Vorrichtung mit den Merkmalen von Anspruch 1 gelöst.

Dadurch, dass die Wellenlänge der Sendestrahlen so gewählt ist, dass diese in einem für das menschliche Auge nicht wahrnehmbaren Bereich liegt, ist eine konstruktive Maßnahme angegeben, eine Blendung des menschlichen Auges beim Betrieb der Vorrichtung zu vermeiden und Reflexe an den Objekten, die zu detektieren sind, zu unterdrücken.

Bevorzugte Ausführungsbeispiele ergeben sich aus den Unteransprüchen.

Ein Polarisationsfilter für diesen Infrarotbereich der Sendestrahlen ist zwischen dem Objekt und dem Empfänger angeordnet und bewirkt, dass die von dem zu detektierenden Objekt reflektierten Strahlen, die dieselbe Polarisation wie die Sendestahlen aufweisen, geblockt und nicht zu dem Empfänger durchgelassen werden.

In einem bevorzugten Ausführungsbeispiel der optoelektronischen Vorrichtung haben die Sendestrahlen einen Wellenlängenbereich von etwa 750 nm oder höher. Die optoelektronische Vorrichtung eignet sich besonders in einer Ausführungsform als Barcodelesegerät.

Die Sendestrahlen des Senders können bevorzugt durch eine Polarisationseinrichtung, die dem Sender nachgelagert ist, polarisiert sein. Die Polarisationseinrichtung ist dabei bevorzugt durch ein Polarisationsfilter zwischen dem Objekt und einer Sendeoptik angeordnet.

Die Sendestrahlen können auch unmittelbar durch den Sender bzw. dessen Optik polarisiert werden.

Zum Ausfiltern von durch das Objekt reflektierten Sendestrahlen, die als Empfangsstrahlen zurück zu dem Empfänger gelangen würden, ist bevorzugt ein Polarisationsfilter zwischen dem Objekt und dem Empfänger angeordnet.

Der Polarisationsfilter kann auch an einer Abdeckscheibe der optoelektronischen Vorrichtung hin zu dem Objekt angeordnet sein.

Der Polarisationsfilter kann auch Teil der Abdeckscheibe selbst sein.

Die optoelektronische Vorrichtung kann sowohl als Barcodelesegerät als auch als Kamerasystem in der Art eines Vision-Sensors gebildet sein.

Die Erfindung wird im Folgenden anhand der Zeichnung erläutert. Die einzige Figur zeigt:

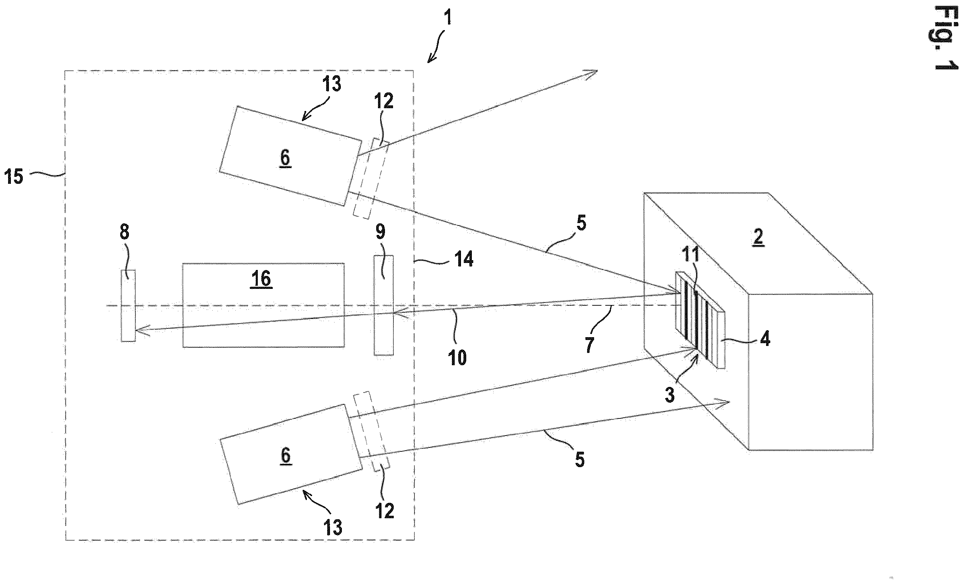

- Fig. 1: eine schematische, perspektivische Darstellung eines Ausführungsbeispiels einer optoelektronischen Vorrichtung.

In Fig. 1 ist der prinzipielle Aufbau eines Ausführungsbeispiels der erfindungsgemäßen optoelektronischen Vorrichtung 1 zur Detektion eines Objekts, wie etwa von Kontrastmustern 3 auf Marken 4 dargestellt. Diese werden auch Barcodes 11 genannt. Diese Marken 4 oder Barcodes 11 können beliebige Folgen und Formen von aufeinander folgenden und aneinander angrenzenden Hell-Dunkel-Flächen aufweisen, wie dies in Fig. 1 veranschaulicht ist. Der Barcode 11 besteht hier aus einer alternierenden Folge von hellen und dunklen, vorzugsweise schwarzen und weißen Linien definierter Länge und Breite.

Die optoelektronische Vorrichtung 1 weist zwei Sendestrahlen 5 emittierende Sender 6 und einen Empfangsstrahlen 7 empfangenden Empfänger 8 auf. Die beiden Sender 6 befinden sich zu je einer Seite und mit Abstand zu dem Empfänger 8 und senden polarisierte Sendestrahlen 5 zu dem zu detektierenden Objekt 2.

Jedem Sender 6 ist eine Sendoptik 13 zugeordnet und dem Empfänger 8 ist eine Empfangsoptik 16 zugeordnet.

Die Sende- und Empfangsoptiken können jeweils von einer Linse gebildet sein.

Der Sender 6 emittiert Sendestrahlen 5 in einem Infrarotbereich, vorzugsweise mit einer Wellenlänge von 750 nm oder höher. Zwischen dem Barcode 11 auf dem Objekt 2 und dem Empfänger 8 ist ein Polarisationsfilter 9 angeordnet, der Strahlen 10, die von dem Objekt 2 reflektiert werden und dieselbe Polarisation wie die Sendestrahlen 5 aufweisen, blockt.

Die Sendestrahlen 5 wiederum sind durch je eine, den Sendern 6 nachgelagerte Polarisationseinrichtung 12 polarisiert. Die Polarisationseinrichtungen 12 können durch Polarisationsfilter, die wie erwähnt, zwischen dem Objekt 2 und einer Sendeoptik 13 angeordnet sind, gebildet sein.

Die Polarisationseinrichtungen 12 können auch an einer Abdeckscheibe 14 der als Barcodelesegerätes 15 gebildeten Vorrichtung 1 angeordnet sein, oder in die Abdeckscheibe 14 integriert sein.

### Bezugszeichenliste

- (1): Optoel ektronisehe Vorrichtung
- (2): Objekt
- (3): Kontrastmuster
- (4): Marke
- (5): Sendestrahl
- (6): Sender
- (7): Empfangsstrahlen
- (8): Empfänger
- (9): Polarisationsfilter
- (10): Strahlen, reflektiert
- (11): Barcode
- (12): Polarisationseinrichtung
- (13): Sendeoptik
- (14): Abdeckscheibe
- (15): Barcodelesegerät
- (16): Empfangsoptik

## Patentansprüche

1. Optoelektronische Vorrichtung (1) zur Detektion eines Objekts (2), insbesondere zur Detektion von mit definierten Kontrastmustern (3) versehenen Marken (4), mit einem Sendestrahlen (5) emittierenden Sender (6) und einem Empfangsstrahlen (7) empfangenden Empfänger (8) und mit einem Polarisationsfilter (9) zwischen dem Objekt (2) und dem Empfänger (8), **dadurch gekennzeichnet, dass** die Wellenlänge der Sendestrahlen (5) so gewählt ist, dass sie in einem für das menschliche Auge nicht wahrnehmbaren Bereich liegt.

2. Optoelektronische Vorrichtung (1) nach Anspruch 1, **dadurch gekennzeichnet, dass** durch den Polarisationsfilter (9) die von dem Objekt (2) reflektierten Strahlen (10), die dieselbe Polarisation wie die Sendestrahlen (5) aufweisen, geblockt sind.

3. Optoelektronische Vorrichtung (1) nach Anspruch 1 oder 2, **dadurch gekennzeichnet, dass** die Sendestrahlen (5) eine Wellenlänge im Bereich von 750 nm und höher aufweisen.

4. Optoelektronische Vorrichtung (1) nach einem der Ansprüche 1 bis 3, **dadurch gekennzeichnet, dass** das Objekt (2) in der Art eines Barcodes (11) gebildet ist.

5. Optoelektronische Vorrichtung (1) nach einem der Ansprüche 1 bis 4, **dadurch gekennzeichnet, dass** die Sendestrahlen (5) durch eine Polarisationseinrichtung (12), die dem Sender (6) nachgelagert ist, polarisiert sind.

6. Optoelektronische Vorrichtung (1) nach einem der Ansprüche 1 bis 4, **dadurch gekennzeichnet, dass** die Sendestrahlen (5) durch den Sender (6) polarisiert sind.

7. Optoelektronische Vorrichtung (1) nach einem der Ansprüche 5 oder 6, **dadurch gekennzeichnet, dass** die Polarisationseinrichtung (12) ein Polarisationsfilter ist, der zwischen dem Objekt (2) und einer Sendeoptik (13) angeordnet ist.

8. Optoelektronische Vorrichtung (1) nach einem der Ansprüche 5 bis 7, **dadurch gekennzeichnet, dass** die Polarisationseinrichtung (12) an einer Abdeckscheibe (14) der optoelektronischen Vorrichtung (1) angeordnet ist.

9. Optoelektronische Vorrichtung (1) nach einem der Ansprüche 5 bis 7, **dadurch gekennzeichnet, dass** die Polarisationseinrichtung (12) Teil einer Abdeckscheibe (14) der optoelektronischen Vorrichtung (1) ist.

10. Optoelektronische Vorrichtung (1) nach einem der Ansprüche 1 bis 9, **dadurch gekennzeichnet, dass** die Vorrichtung (1) in der Art eines Barcodelesegerätes (15) oder als Kamerasystem gebildet ist.

11. Optoelektronische Vorrichtung (1) nach einem der Ansprüche 1 bis 10, **dadurch gekennzeichnet, dass** die Polarisationsfilter oder die Polarisationseinrichtung als lineare Polarisationsfilter ausgeführt sind.

12. Optoelektronische Vorrichtung (1) nach einem der Ansprüche 1 bis 10, **dadurch gekennzeichnet, dass** die Polarisationsfilter oder die Polarisationseinrichtung als zirkulare Polarisationsfilter ausgeführt sind.
